# EUROPÄISCHE PATENTANMELDUNG

(11) **EP 2 361 787 A1**
(43) Veröffentlichungstag der Anmeldung: **31.08.2011**
(21) Anmeldenummer: 10001862.1
(22) Anmeldetag: 24.02.2010
(51) Int. Cl.: B44C 5/04, B30B 15/06, B32B 37/10

(54) **Verfahren zur Oberflächenbeschichtung einer Trägerplatte, dazugehörige Vorrichtung und Produkt**

(71) Anmelder: FunderMax GmbH, 9300 St. Veit an der Glan (AT)
(72) Erfinder: Dolezel-Horwath, Elizabeth, 9020 Klagenfurt (AT); Lammer, Herfried, 9300 St. Veit an der Glan (AT)
(74) Vertreter: Ofner, Clemens

(57) **Zusammenfassung**

Ein Verfahren und eine Vorrichtung (1) zur Oberflächenbeschichtung einer Trägerplatte (4), insbesondere einer Pressstoffplatte, mit einer Deckschicht (3), wobei die Deckschicht (3) zur Aufbringung auf die Trägerplatte (4) erwärmt und mittels zumindest einer Druckplatte (2) auf die Trägerplatte (4) gepresst wird, wobei ein Negativabdruck der Oberflächenstruktur der Druckplatte (2) in die Deckschicht (3) eingebracht wird, wobei die Druckplatte (2) ein Oberflächenstruktur aufweist, welche der Oberflächenstruktur einer satinierten Glasplatte entspricht und die Oberflächenstruktur der Druckplatte (2) in die Decksicht (3) eingeprägt wird.

## Beschreibung

Die Erfindung betrifft ein Verfahren zur Oberflächenbeschichtung einer Trägerplatte, insbesondere einer Pressstoffplatte, mit einer Deckschicht, wobei die Deckschicht zu Aufbringung auf die Trägerplatte erwärmt und mittels zumindest einer Druckplatte auf die Trägerplatte gepresst wird, wobei ein Negativabdruck der Oberflächenstruktur der Druckplatte in die Deckschicht eingebracht wird.

Weiters betrifft die Erfindung eine Pressstoffplatte, welche eine Deckschicht aufweist.

Darüber hinaus hat die Erfindung eine Vorrichtung zum Beschichten einer Trägerplatte, insbesondere einer Pressstoffplatte, zum Gegenstand, wobei die Vorrichtung zumindest eine Druckplatte zum Aufpressen einer Deckschicht auf die Trägerplatte aufweist.

Unter dem Begriff "Pressstoffplatte" werden in diesem Dokument sowohl aus einem Schichtstapel verpresste Schichtpressstoffplatten als auch Platten aus faser- oder spanförmigen Holzwerkstoffen oder Platten aus einem Gemisch von Holz mit anderen natürlichen Fasern (Stroh, Bambus, Bambusblätter etc.) bzw. Kunststofffasern wie z.B. Polyester verstanden, wobei diese Holzersatzfasern auch als alleiniges Fasermaterial eingesetzt werden können. Insbesondere werden unter dem Begriff "Pressstoffplatten" auch aus den oben genannten Stoffen hergestellte mitteldichte (Holz)faserplatten (so genannte "MDF-Platten") und hochdichte (Holz)faserplatten (so genannte "HDF-Platten" verstanden. Weiters fallen auch alle herkömmlichen Spanplatten sowie Schichtstoffplatten gemäß der EN 438 unter den Begriff Pressstoffplatte, wie er in diesem Dokument verwendet wird.

Als "Trägerplatte" wird in diesem Dokument eine noch nicht mit einer äußeren Deckschicht beschichtete Pressstoffplatte bezeichnet.

Ein Verfahren bzw. eine Pressstoffplatte der eingangs genannten Art sind beispielsweise aus der DE3334921C bekannt geworden. Bei dem bekannten Verfahren wird auf eine Trägerplatte, die beispielsweise aus einer Spanplatte bestehen kann, eine Kleberschicht in gleichmässiger Dicke aufgetragen. Hierauf wird eine Schichtstoffplatte, die aus mit ausgehärteten Harzen getränkten Papierbahnen besteht, auf die Kleberschicht aufgelegt. Der so geschaffene Verbund wird dann in einer Prägepresse unter Wärmezufuhr verpresst und kurzzeitig ausgehärtet.

Nachteilig an dem bekannten Verfahren ist vor allem, dass in einem fertig gestellten Zustand der Pressstoffplatte selbst kleine Beschädigungen der Deckschicht, beispielsweise in Form von Kratzern, optisch zumeist deutlich wahrnehmbar sind.

Es ist daher eine Aufgabe der Erfindung eine gegenüber Beschädigungen möglichst unempfindliche Beschichtung der Pressstoffplatte zu schaffen.

Diese Aufgabe wird mit einem Verfahren der eingangs genannten Art erfindungsgemäß dadurch gelöst, dass die Druckplatte eine Oberflächenstruktur aufweist, welche der Oberflächenstruktur einer satinierten Glasplatte entspricht und in die Deckschicht die Oberflächenstruktur der Druckplatte eingeprägt wird.

Die erfindungsgemäße Lösung bewirkt aufgrund der mit ihr erzielten Oberflächenstruktur, eine wesentliche Verbesserung der Widerstandsfähigkeit der Oberfläche gegen Beschädigungen insbesondere gegen ein Zerkratzen.

Eine Variante der Erfindung, welche sich durch eine besonders günstige Handhabung auszeichnet, sieht vor, dass die Deckschicht aus einem mit einem Harz imprägnierten Trägermaterial gebildet wird, wobei es unter Einfluss von Temperatur und Druck während des Aufbringens der Deckschicht zu einem Fließen des Harzes und zu einem teilweisen Eindringen des Harzes in die Pressstoffplatte kommt.

Gemäß einer kostengünstigen Weiterbildung der oben genannten Variante kann als Trägermaterial Papier zum Einsatz kommen.

Vorteilhafterweise kann als Trägerplatte eine Schichtstoff- oder Spanplatte, insbesondere eine MDF oder HDF Platte, verwendet werden.

Besonders gute Eigenschaften hinsichtlich Prägung und Aufbringung der Deckschicht können dadurch verwirklicht werden, dass die Deckschicht aus einem melaminimprägnierten Papier gebildet wird.

Weiters kann die Deckschicht auch aus einem harnstoff/melaminimprägnierten Papier gebildet sein.

Eine sich durch eine einfache Realisierbarkeit auszeichnende Ausführungsform der Erfindung sieht vor, dass als Druckplatte eine satinierte Glasplatte verwendet wird.

Um ein Pressen mit hohen Drücken ermöglichen zu können, kann als Druckplatte ein Blech verwendet werden, welches mit einer Glasschicht überzogen ist, die zumindest abschnittsweise satiniert ist. Günstigerweise kann die Glasschicht in einem Sol-Gel Verfahren auf das Blech aufgebracht werden.

Als besonders vorteilhaft hinsichtlich der Erzielung einer besonders kratzunempfindlichen Oberfläche hat sich herausgestellt, wenn in die Deckschicht der Pressstoffplatte eine Oberflächenstruktur mit einem zwischen 1 und 6 Glanzeinheiten liegenden Glanzgrad bei einer unter einem Messwinkel von 60° oder 85° durchgeführten Glanzgradmessung eingebracht wird. Hierbei kann in die Decksicht eine Oberflächenstruktur eingebracht werden, deren Rauheitsprofil eine Gesamthöhe zwischen 13 und 18 µm aufweist.

Vorteilhafterweise ist die Trägerplatte eine Schichtstoff oder Spanplatte, insbesondere eine MDF oder HDF Platte.

Die oben genannte Aufgabe lässt sich auch mit einer Pressstoffplatte der eingangs genannten Art lösen, deren Deckschicht erfindungsgemäß einen zwischen den Werten 1 und 6 liegenden Glanzgrad bei einer unter einem Messwinkel von 60° oder 85° durchgeführten Glanzgradmessung aufweist. Durch die erfindungsgemäße Platte kann auf völlig überraschende Weise eine sehr hohe Unempfindlichkeit gegenüber Beschädigungen der Deckschicht bzw. Oberfläche erzielt werden. Insbesondere die Kratzfestigkeit der Oberfläche wird gegenüber herkömmlichen Platten wesentlich erhöht.

Als besonders günstig hinsichtlich der Erzielung eines widerstandsfähigen Oberfläche hat sich herausgestellt, dass die Deckschicht eine Oberflächenstruktur aufweist, welche dem Negativabdruck der Oberflächenstruktur einer satinierten Glasplatte entspricht.

Gemäß einer vorteilhaften Ausführungsform der Erfindung kann eine Gesamthöhe eines Rauheitsprofils der Deckschicht zwischen 13 und 18 µm liegen. Weiters hat es sich als sehr vorteilhaft hinsichtlich der Oberflächeneigenschaften der Deckschicht herausgestellt, dass die Deckschicht eine gemittelte Höhe des Rauheitsprofils zwischen 10 und 14 µm aufweist. Durch alle in diesem Absatz genannten Ausführungsformen kann einzeln oder in Kombination miteinander eine sehr große Unempfindlichkeit der Deckschicht der Pressstoffplatte erzielt werden.
Die der Erfindung zugrunde liegende Aufgabe kann auch mit einer Vorrichtung der eingangs genannten Art erfindungsgemäß dadurch gelöst werden, dass die Druckplatte die Oberflächenstruktur einer satinierten Glasplatte aufweist.

Eine einfach zu realisierende Variante der erfindungsgemäßen Vorrichtung sieht vor, dass die Druckplatte als satinierte Glasplatte ausgebildet ist.

Die Erfindung samt weiteren Vorteilen wird im Folgenden anhand einiger nicht einschränkender Ausführungsbeispiele näher erläutert, welche in den Zeichnungen dargestellt sind. In diesen zeigen schematisch:
Fig. 1 eine erfindungsgemäße Vorrichtung;
Fig. 2 ein Rauheitsprofil einer Beschichtung einer erfindungsgemäßen Pressstoffplatte an einer ersten Messstelle;
Fig. 3 ein Rauheitsprofil der Beschichtung der Pressstoffplatte aus Fig. 2 an einer zweiten Messstelle;
Fig. 4 ein Rauheitsprofil der Beschichtung der Pressstoffplatte aus Fig. 2 an einer dritten Messstelle
Fig. 5 ein Rauheitsprofil der Beschichtung der Pressstoffplatte aus Fig. 2 an einer vierten Messstelle
Fig. 6 ein Rauheitsprofil der Beschichtung der Pressstoffplatte aus Fig. 2 an einer fünften Messstelle und
Fig. 7 ein Rauheitsprofil der Beschichtung der Pressstoffplatte aus Fig. 2 an einer sechsten Messstelle

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

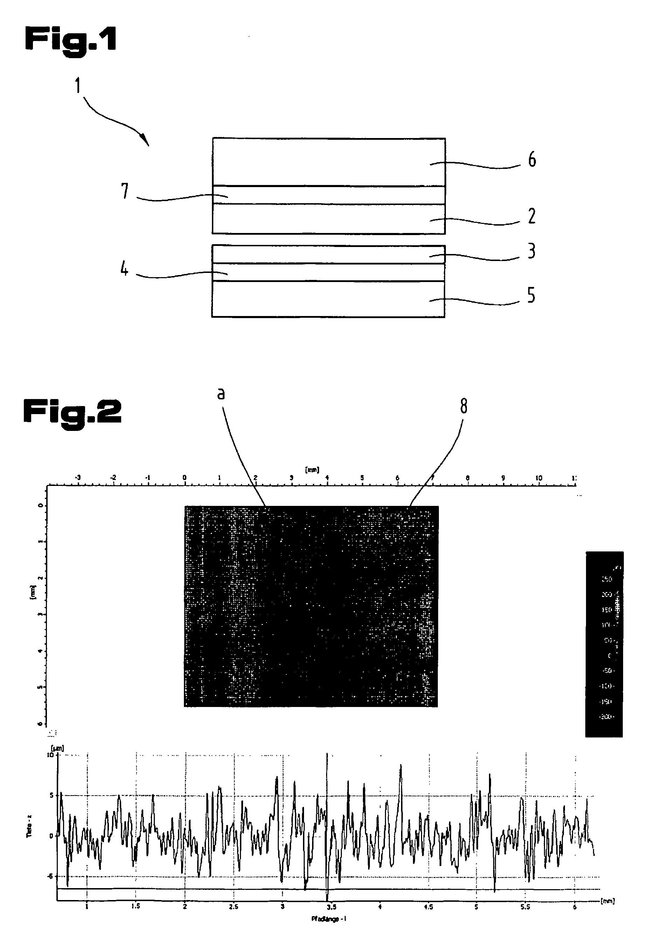

Gemäß Fig. 1 weist eine erfindungsgemäße Vorrichtung 1 zum Beschichten einer Pressstoffplatte eine Druckplatte 2 zum Aufpressen einer Deckschicht 3 auf eine in die Vorrichtung eingelegte Trägerplatte 4 auf. Die Trägerplatte 4 kann auf einer Auflagefläche 5 der Vorrichtung 1 aufgelegt sein. Die Druckplatte 2 hat erfindungsgemäß eine Oberflächenstruktur, welche der einer satinierten Glasplatte entspricht. Die Druckplatte 2 kann an einem Presstempel 6 befestigt sein, der gegen die Oberfläche der Trägerplatte 4 gepresst werden kann, um die Deckschicht 3 aufzupressen. Die Seite der Druckplatte 2, welche einer satinierten Glasoberfläche entspricht, ist der aufzubringenden Deckschicht 3 zugewandt.

Weiters kann die Druckplatte 2 an einer Heizplatte 7 verbunden sein, um gegebenenfalls eine für ein Aufbringen der Decksicht erforderliche Temperatur erzeugen zu können. Die Heizplatte 7 könnte aber auch an der Auflagefläche 5 angeordnet sein. Kommt eine Heizplatte 7 zum Einsatz handelt es sich bei der erfindungsgemäßen Vorrichtung um eine Heizpresse. Ähnliche Vorrichtungen nur ohne Druckplatte 2 mit einer erfindungsgemäßen Oberflächenstruktur kommen beim Beschichten von Platten, beispielsweise mit Furnieren, zum Einsatz. An dieser Stelle sei auch daraufhingewiesen, dass auch zwei einander gegenüberliegende Druckplatten 2 zum Einsatz kommen können. Somit würde die Trägerplatte 4 zwischen zwei Druckplatten 2 liegen, sodass eine Beschichtung von einer vorderen und hinteren Oberfläche der Trägerplatte 4 gleichzeitig erfolgen kann.

Aufgrund seiner großen Wärmekapazität ist Glas als Material für die Druckplatte 2 sehr gut geeignet, falls eine Heizung der Druckplatte 2 erfolgt. Darüber hinaus hat es sich als besonders vorteilhaft herausgestellt, wenn anstelle einer Druckplatte 2, welche nur die Oberflächenstruktur einer satinierten Glasplatte aufweist, selbst aber aus einem anderen Material hergestellt ist, gleich eine satinierte Glasplatte als Druckplatte verwendet wird. Die als Druckplatte 2 verwendete Glasplatte ist bevorzugterweise durch Verätzen mit Flusssäure hergestellt, wobei natürlich auch andere Verfahren zum Satinieren/Mattieren der Glasplatte verwendet werden können, wie beispielsweise Sandstrahlen. Allerdings hat sich herausgestellt, dass sich durch Verätzen der Glasplatte mit Flusssäure besonders gute Ergebnisse hinsichtlich der Kratzfestigkeit der Plattenoberfläche erzielen lassen. Grundsätzlich eignet sich von der Oberflächenbeschaffenheit aber jede Glasplatte mit einer satinierten Oberfläche als Druckplatte 2 zur Durchführung des erfindungsgemäßen Verfahrens oder zur Verwirklichung einer erfindungsgemäßen Vorrichtung.

Gemäß einer Variante der Erfindung kann als Druckplatte ein Blech verwendet werden, welches mit einer Glasschicht überzogen ist, deren der Deckschicht zugewandte Oberfläche nach dem Auftragen auf das Blech satiniert wird. Bevorzugterweise wird hierbei die Glasschicht in einem Sol-Gel Verfahren auf das Blech aufgebracht.

Gemäß dem erfindungsgemäßen Verfahren zur Beschichtung einer Trägerplatte 4, insbesondere einer Pressstoffplatte, mit der Deckschicht 3, kann die Deckschicht 3 auf die Trägerplatte 4 aufgelegt und unter Wärmeeinfluss mit der Trägerplatte 4 verpresst werden. Bevorzugterweise wird als Deckschicht 3 ein mit einem Harz imprägniertes Trägermaterial, beispielsweise Papier, verwendet. So kann die Deckschicht 3 beispielsweise aus einem harnstoff /melaminimprägnierten Papier gebildet werden. Insbesondere können die Deckschicht 3 und die Trägerplatte 4, wie in der EP0846135B beschrieben, zusammengesetzt bzw. aufgebaut sein, wobei in diesem Fall für das Verpressen und Beschichten, die dort angegebenen Drücke und Temperaturen verwendet werden können.

Unter Einfluss von Wärme und Druck während des Aufbringens der Deckschicht 3 kommt es bei Verwendung eines mit einem harnstoff-/melaminimprägnierten Papier zu einem Fließen des Harzes und zu einem teilweisen Eindringen des Harzes in die Trägerplatte 4. Ein Negativabdruck der Oberflächenstruktur der Druckplatte 2 wird hierbei in die Deckschicht 3 eingeprägt.
Erfindungsgemäß hergestellte Pressstoffplatten weisen eine matte Plattenoberfläche bzw. Deckschicht 3 auf, deren Oberflächenstruktur dem Negativabdruck der Oberflächenstruktur einer satinierten Glasplatte entspricht.
Wie den Figuren 2 bis 7 und Tabelle 1 zu entnehmen ist, kann eine erfindungsgemäße Pressstoffplatte 8 ein Rauheitsprofil mit einer gemittelten Höhe des zwischen 10 und 14 µm und einer Gesamthöhe zwischen 13 und 18 µm aufweisen.

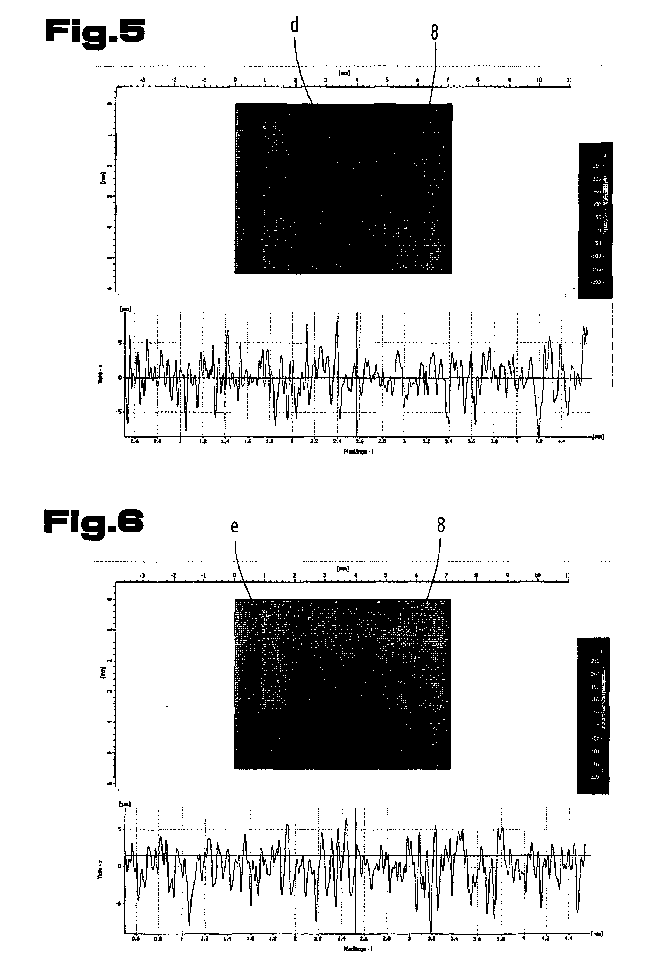

Die Messung der Rauheit wurde an einer weißen beschichteten Spanplatte mit einer erfindungsgemäßen Oberfläche durchgeführt. Zur Messung wurde ein 3D Scan der Oberfläche erstellt. An den 3D-gescannten Oberflächenmessstellen wurden charakteristische Werte der Rauheiten gemessen, und zwar an drei Stellen einer gedachten vertikalen Linie (Fig. 2 bis 4) und an drei Stellen einer gedachten horizontalen Linie (Fig. 5 bis 7).

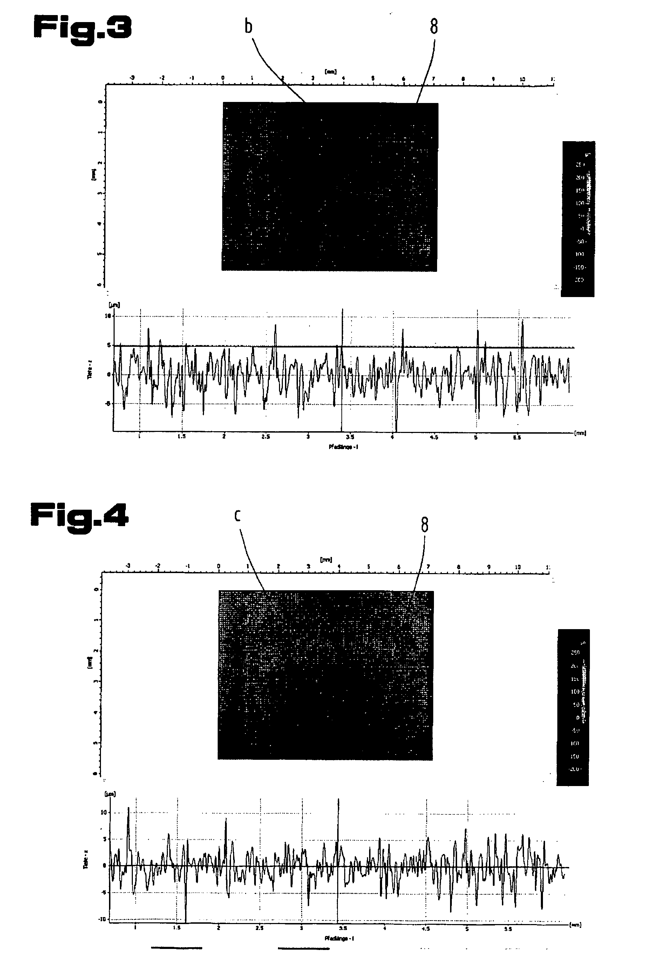

Fig. 2 zeigt die Messstelle a, Fig. 3 zeigt die Messstelle b und Fig. 4 die Messstelle c auf der Oberfläche des betrachteten Beispiels einer erfindungsgemäßen Pressstoffplatte 8.

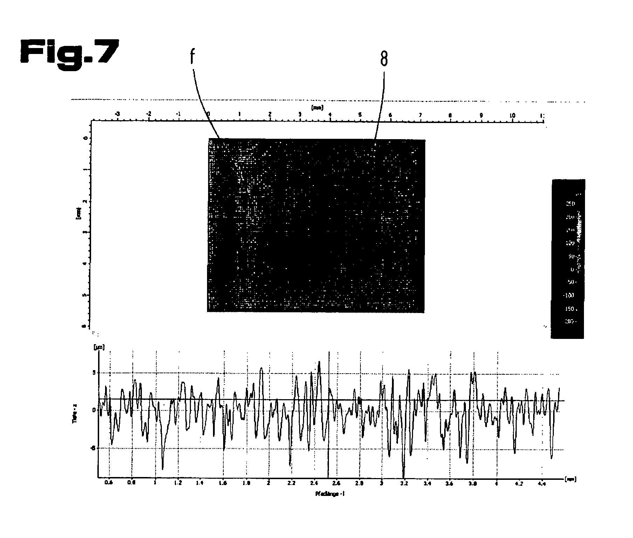

Fig. 5 zeigt die Messstelle d, Fig. 6 die Messstelle e und Fig. 7 die Messstelle f auf der Oberfläche des betrachteten Beispiels einer erfindungsgemäßen Pressstoffplatte 8.

Weiters ist in den Figuren 2 bis 7 jeweils das an den einzelnen Messstellen ermittelte Rauheitsprofil dargestellt.
Die an den unterschiedlichen Stellen der in Fig. 2 bis 7 dargestellten Oberfläche einer erfindungsgemäßen Pressstoffplatte 8 ermittelten, charakteristischen Rauheitswerte sind in Tabelle 1 wiedergegeben.

**Tabelle 1:**

| | Horizontal_a | Horizontal_b | Horizontal_c | Vertikal_d | Vertikal_e | Vertikal_f | |
|---|---|---|---|---|---|---|---|
| Name | Wert | Wert | Wert | Wert | Wert | Wert | Beschreibung |
| Ra | 1.8349µm | 1.6534µm | 1.7969µm | 1.7231 µm | 1.7319µm | 1.5754µm | Durchschnittliche Rauheit des Profils |
| Rq | 2.3356µm | 2.0925µm | 2.3606µm | 2.3248µm | 2.2696µm | 2.056µm | Quadratische Rauheit |
| Rt | 16.354µm | 13.833µm | 17.928µm | 17.483µm | 14.463µm | 15.049µm | Gesamthöhe des Rauheitsprotil |
| Rz | 12.471µm | 11.141µm | 13.565µm | 12.993µm | 12.302µm | 10.81µm | Gemittelte Höhe des Rauheitsprofil |
| Rmax | 14.127µm | 13.312µm | 17.72µm | 16.743µm | 13.379µm | 15.049µm | Maximale Höhe des Rauheitsprofil innerhalb einer Einzelmessstrecke |
| Rp | 8.1407µm | 6.3534µm | 11.607µm | 11.152µm | 8.7321µm | 8.9411µm | Höhe der größten Profilspitze des Rauheitsprofil |
| Rv | 8.2136µm | 7.4801µm | 6.3213µm | 6.3308µm | 5.7308µm | 6.1078µm | Maximale Tiefe des Rauheitsprofil |
| Rc | 7.2636µm | 6.5493µm | 7.8079µm | 7.688µm | 7.4785µm | 7.2468µm | Mittlere Höhe der Profilunregelmäßigkeiten des Rauheitsprofil |
| Rsm | 124.64µm | 124.18µm | 135.72µm | 157.28µm | 139.76µm | 141.46µm | Mittlerer Abstand der Profilunregelmäßigkeiten des Rauheitsprofil |
| Rsk | 0,0704 | -0,0203 | 0,5233 | 0,8043 | 0,7855 | 0,471 | Schiefe des Rauheitsprofil |
| Rku | 3,3999 | 3,2404 | 4,4073 | 5,1987 | 4,0404 | 3,7506 | Steilheit des Rauheitsprofil |
| Rdq | 0,2017 | 0,1862 | 0,217 | 0,2009 | 0,2057 | 0,1852 | Quadratischer Mittelwert der Profilsteigung des Rauheitsprofil |

In Tabelle 2 und 3 sind die charakteristischen Rauheitswerte der Oberflächen zweier Presstoffplatten aus dem Stand der Technik wiedergegeben. Tabelle 2 bezieht sich auf eine tiefmatte Oberfläche und Tabelle 3 auf eine hochglänzende Oberfläche. Die Werte in den Tabellen 2 und 3 wurden an den entsprechenden Oberflächenstellen der Pressstoffplatten wie in Tabelle 1 erfasst.

**Tabelle 2:**

| | Horizontal_a | Horizontal_b | Horizontal_c | Vertikal_d | Vertikal_e | Vertikal_f | |
|---|---|---|---|---|---|---|---|
| Name | Wert | Wert | Wert | Wert | Wert | Wert | Beschreibung |
| Ra | 1.9489µm | 2.0848µm | 2.0504µm | 1.9397µm | 2.174µm | 2. 1215µm | Average roughness of profile |
| Rq | 2.2466µm | 2.3864µm | 2.3821µm | 2.2816µm | 2.5447µm | 2.5094µm | Root-Mean-Square roughness of profile |
| Rt | 10,099µm | 9.6979µm | 11.922µm | 10.001µm | 11.295µm | 12.234µm | Gesamthöhe des Rauheitsprofil |
| Rz | 8.3182µm | 9.0495µm | 8.931µm | 8.3146µm | 9.7131µm | 9.6179µm | Gemittelte Höhe des Rauheitsprofil |
| Rmax | 10.099µm | 9.5276µm | 10.635µm | 10.001µm | 11.266µm | 11.299µm | Maximale Höhe des Rauheitsprofil innerhalb einer Einzelmessstrecke |
| Rp | 4.6083µm | 4.6412µm | 5.233µm | 5.1259µm | 4.8806µm | 5.2804µm | Höhe der größten Profilspitze des Rauheitsprofil |
| Rv | 5.4908µm | 5.0567µm | 6.6892µm | 4.8752µm | 6.4141µm | 6.9539µm | Maximum valley height of Rauheitsprofil |
| Rc | 6.5737µm | 6.8727µm | 6.8168µm | 6.7775µm | 7.7217µm | 7.4824µm | Mittlere Höhe der Profilunregelmäßigkeiten des Rauheitsprofil |
| Rsm | 350.84µm | 363.66µm | 360.21µm | 305.42µm | 426.21µm | 348.53µm | Mittlerer Abstand der Profilunregelmäßigkeiten des Rauheitsprofil |
| Rsk | -0,0953 | -0,048 | -0,1112 | 0,1716 | -0,1649 | -0,009 | Schiefe des Rauheitsprofil |
| Rku | 1,9788 | 1,8322 | 2,0237 | 2,1711 | 2,0883 | 2,1554 | Steilheit des Rauheitsprofil |
| Rdq | 0,0678 | 0,0718 | 0,0642 | 0,0725 | 0,0702 | 0,0745 | Quadratischer Mittelwert der Profilsteigung des Rauheitsprofil |

**Tabelle 3:**

| | Horizontal_a | Horizontal_b | Horizontal_c | Vertikal_d | Vertikal_e | Vertikal_f | |
|---|---|---|---|---|---|---|---|
| Name | Wert | Wert | Wert | Wert | Wert | Wert | Beschreibung |
| Ra | 784.16nm | 867.78nm | 837.06nm | 583.65nm | 605.25nm | 703.1nm | Average roughness of profile |
| Rq | 1.0144µm | 1.1257µm | 1.0378µm | 749.32nm | 750.66nm | 869.93nm | Root-Mean-Square roughness of profile |
| Rt | 5.965µm | 9.4929µm | 4.8754µm | 4.4467µm | 3.8974µm | 4.3085µm | Gesamthöhe des Rauheitsprofil |
| Rz | 4.4047µm | 5.2257µm | 4.1605µm | 2.8752µm | 2.8485µm | 3.2607µm | Gemittelte Höhe des Rauheitsprofil |
| Rmax | 5.8308µm | 8.6785µm | 4.8754µm | 4.0573µm | 3.6693µm | 3.837µm | Maximale Höhe des Rauheitsprofil innerhalb einer Einzelmessstrecke |
| Rp | 2.5382µm | 2.5885µm | 2.4105µm | 2.2217µm | 1.6782µm | 2.2249µm | Höhe der größten Profilspitze des Rauheitsprofil |
| Rv | 3.4268µm | 6.9044µm | 2.4649µm | 2.225µm | 2.2192µm | 2.0836µm | Maximum valley height of Rauheitsprofil |
| Rc | 3.0613µm | 3.686µm | 2.9728µm | 2.1935µm | 2.2878µm | 2.4989µm | Mittlere Höhe der Profilunregelmäßigkeiten des Rauheitsprofil |
| Rsm | 48.202µm | 47.108µm | 46.304µm | 54.639µm | 68.247µm | 51.102µm | Mittlerer Abstand der Profilunregelmäßigkeiten des Rauheitsprofil |
| Rsk | -0,391 | -0,8593 | 0,0462 | 0,0694 | -0,1932 | -0,1819 | Schiefe des Rauheitsprofil |
| Rku | 3,4001 | 6,2294 | 2,6272 | 3,2988 | 2,7885 | 2,5739 | Steilheit des Rauheitsprofil |
| Rdq | 0,221 | 0,3163 | 0,2162 | 0,133 | 0,1182 | 0,1562 | Quadratischer Mittelwert der Profilsteigung des Rauheitsprofil |

Weiters weist eine erfindungsgemäße Platte einen und einen zwischen 1 und 6 Glanzeinheiten liegenden Glanzgrad bei einer unter einem Messwinkel von 60° oder 85° durchgeführten Glanzgradmessung auf.
In Tabelle 4 sind gemessene Glanzeinheiten bei einem Messwinkel von 60° und von 85° einer erfindungsgemäßen Pressstoffplatte wiedergegeben, während in Tabelle 5 die Glanzeinheiten der tiefmatten Oberfläche aus Tabelle 2 bei einem Messwinkel von 60° bzw. 85° wiedergegeben sind.

**Tabelle 4:**

| Messwinkel 60° | Messwinkel 85° |
|---|---|
| 4,3 | 2,4 |
| 4,3 | 2,5 |
| 4,2 | 2,4 |

**Tabelle 5:**

| Messwinkel 60° | Messwinkel 85° |
|---|---|
| 6,8 | 8,7 |
| 6,8 | 8,8 |
| 6,9 | 8,9 |

Für hochglänzende Oberflächen, welche beispielsweise ein Rauheitsprofil nach Tabelle 3 aufweisen, werden bei einem Messwinkel von 60° mehr als 110 Glanzeinheiten und bei einen Messwinkel von 20° über 105 Glanzeinheiten gemessen.

Wie man aus den Tabellen 1 bis 5 leicht erkennen kann unterscheidet sich die Oberfläche einer erfindungsgemäßen Pressstoffplatte von herkömmlichen Platten vor allem durch den unterschiedlichen Glanzgrad sowie durch die Gesamthöhe und die gemittelte Höhe des Rauheitsprofils.

Durch die erfindungsgemäße Oberflächenstruktur wird vollkommen überraschend eine wesentliche Verbesserung der Kratzfestigkeit der Oberfläche der Pressstoffplatte 8 erzielt. Abschließend sei festgehalten, dass die Ausführungsbeispiele lediglich mögliche Ausführungsvarianten der erfindungsgemäßen Lösung zeigen, wobei die Erfindung nicht auf die speziell dargestellten Ausführungsvarianten eingeschränkt ist. Insbesondere sind auch Kombinationen der einzelnen Ausführungsvarianten untereinander möglich, wobei diese Variationsmöglichkeiten aufgrund der Lehre zum technischen Handeln der gegenständlichen Erfindung im Können des auf diesem technischen Gebiet tätigen Fachmannes liegen. Es sind auch sämtliche denkbaren Ausführungsvarianten, die den der Erfindung zugrunde liegenden Lösungsgedanken verwirklichen und nicht explizit beschrieben bzw. dargestellt oder durch Kombinationen einzelner Details der dargestellten und beschriebenen Ausführungsvarianten möglich sind, vom Schutzumfang, wie er durch die Ansprüche festgelegt ist, mit umfasst. Ebenso erstreckt sich der Schutz auch auf die einzelnen Komponenten der erfindungsgemäßen Vorrichtung, soweit diese für sich genommen wesentlich für die Erfindung sind und zur deren Realisierung verwendet werden.

### Bezugszeichenaufstellung

- 1: Vorrichtung
- 2: Druckplatte
- 3: Deckschicht
- 4: Trägerplatte
- 5: Auflagefläche
- 6: Pressstempel
- 7: Heizplatte
- 8: Pressstoffplatte

- a: erste Messstelle
- b: zweite Messstelle
- c: dritte Messstelle
- d: vierte Messstelle
- e: fünfte Messstelle
- f: sechste Messstelle

## Patentansprüche

1. Verfahren zur Oberflächenbeschichtung einer Trägerplatte (4), insbesondere einer Pressstoffplatte, mit einer Deckschicht (3), wobei die Deckschicht (3) zur Aufbringung auf die Trägerplatte (4) erwärmt und mittels zumindest einer Druckplatte (2) auf die Trägerplatte (4) gepresst wird, wobei ein Negativabdruck der Oberflächenstruktur der Druckplatte (2) in die Deckschicht (3) eingebracht wird, **dadurch gekennzeichnet, dass** die Druckplatte (2) eine Oberflächenstruktur aufweist, welche der Oberflächenstruktur einer satinierten Glasplatte entspricht und die Oberflächenstruktur der Druckplatte (2) in die Deckschicht (3) eingeprägt wird.

2. Verfahren nach Anspruch 1, **dadurch gekennzeichnet, dass** die Deckschicht (3) aus einem mit einem Harz imprägnierten Trägermaterial gebildet wird, wobei es unter Einfluss von Wärme und Druck während des Aufbringens der Deckschicht (3) zu einem Fließen des Harzes und zu einem teilweisen Eindringen des Harzes in die Trägerplatte (4) kommt.

3. Verfahren nach Anspruch 2, **dadurch gekennzeichnet, dass** als Trägermaterial Papier verwendet wird.

4. Verfahren nach Anspruch 2, **dadurch gekennzeichnet, dass** als Trägerplatte eine Schichtstoff- oder Spanplatte, insbesondere eine MDF oder HDF Platte, verwendet wird.

5. Verfahren nach Anspruch 4, **dadurch gekennzeichnet, dass** die Deckschicht (3) aus einem melaminimprägnierten Papier gebildet wird.

6. Verfahren nach Anspruch 4, **dadurch gekennzeichnet, dass** die Deckschicht (3) aus einem harnstoff-/melaminimprägnierten Papier gebildet wird.

7. Verfahren nach einem der Ansprüche 1 bis 6, **dadurch gekennzeichnet, dass** als Druckplatte (2) eine satinierte Glasplatte verwendet wird.

8. Verfahren nach einem der Ansprüche 1 bis 7, **dadurch gekennzeichnet, dass** als Druckplatte (2) ein Blech verwendet wird, welches mit einer Glasschicht überzogen ist, die zumindest abschnittsweise satiniert ist.

9. Verfahren nach Anspruch 8, **dadurch gekennzeichnet, dass** die Glasschicht in einem Sol-Gel Verfahren auf das Blech aufgebracht ist.

10. Verfahren nach einem der Ansprüche 1 bis 9, **dadurch gekennzeichnet, dass** in die Deckschicht (3) der Pressstoffplatte (8) eine Oberflächenstruktur mit einem zwischen 1 und 6 Glanzeinheiten liegenden Glanzgrad bei einer unter einem Messwinkel von 60° oder 85° durchgeführten Glanzgradmessung eingebracht wird.

11. Verfahren nach Anspruch 10, **dadurch gekennzeichnet, dass** in die Decksicht (3) eine Oberflächenstruktur eingebracht wird, deren Rauheitsprofil eine Gesamthöhe zwischen 13 und 18 µm aufweist.

12. Pressstoffplatte (8), welche eine Deckschicht (3) aufweist, **dadurch gekennzeichnet, dass** die Deckschicht (3) einen zwischen 1 und 6 Glanzeinheiten liegenden Glanzgrad bei einer unter einem Messwinkel von 60° oder 85° durchgeführten Glanzgradmessung aufweist.

13. Presstoffplatte nach Anspruch 12, **dadurch gekennzeichnet, dass** die Deckschicht (3) eine Oberflächenstruktur aufweist, welche dem Negativabdruck der Oberflächenstruktur einer satinierten Glasplatte entspricht.

14. Pressstoffplatte nach Anspruch 12 oder 13, **dadurch gekennzeichnet, dass** die Trägerplatte eine Schichtstoff- oder Spanplatte, insbesondere eine MDF oder HDF Platte, ist.

15. Pressstoffplatte nach einem der Ansprüche 12 bis 14, **dadurch gekennzeichnet, dass** eine Gesamthöhe eines Rauheitsprofils der Deckschicht (3). zwischen 13 und 18 µm liegt.

16. Pressstoffplatte nach einem der Ansprüche 12 bis 15, **dadurch gekennzeichnet, dass** eine gemittelte Höhe eines Rauheitsprofils der Deckschicht (3) zwischen 10 und 14 µm aufweist.

17. Vorrichtung (1) zum Beschichten einer Trägerplatte (4), insbesondere einer Pressstoffplatte nach einem der Ansprüche 7 bis 10, wobei die Vorrichtung zumindest eine Druckplatte (2) zum Aufpressen einer Deckschicht (3) auf die Trägerplatte (4) aufweist, **dadurch gekennzeichnet, dass** die Druckplatte (2) die Oberflächenstruktur einer satinierten Glasplatte aufweist.
